# EUROPEAN PATENT APPLICATION

(11) **EP 4 653 725 A1**
(43) Date of publication of application: **26.11.2025**
(21) Application number: 24895450.5
(22) Date of filing: 21.05.2024
(51) Int. Cl.: F16H 3/00, B60K 6/24, B60K 6/26, B60K 6/36, F16H 57/02, F16H 57/023, H02K 7/116

(54) **GEARBOX, HYBRID POWER SYSTEM AND AUTOMOBILE**

(30) Priority: 29.11.2023 CN 202311643192
(71) Applicant: Chery Automobile Co., Ltd., Wuhu, Anhui 241006 (CN)
(72) Inventor: WANG, Qinglai, Wuhu, Anhui 241006 (CN); QI, Keguang, Wuhu, Anhui 241006 (CN); MEI, Qian, Wuhu, Anhui 241006 (CN); XU, Zhitan, Wuhu, Anhui 241006 (CN); GUO, Lulu, Wuhu, Anhui 241006 (CN); GUAN, Qingbin, Wuhu, Anhui 241006 (CN)
(74) Representative: Yang, Shu
(86) International application number: PCT/CN2024/094411
(87) International publication number: WO 2025/112340

(57) **Abstract**

Disclosed in the present invention are a gearbox, a hybrid power system and an automobile. The gearbox comprises a first clutch assembly, a second clutch assembly, a first gear train, a second gear train, a third gear train, a power input shaft and a power output shaft, wherein a first clutch is connected to a first clutch hoop and a first hollow shaft, a second clutch is connected to the first clutch hoop and the power input shaft, the power input shaft is coaxially inserted into the first clutch hoop, and the first hollow shaft is movably sleeved outside the power input shaft; a third clutch is connected to a second clutch hoop and a second hollow shaft, a fourth clutch is connected to the second clutch hoop and the power input shaft, the power input shaft is coaxially inserted into the second clutch hoop, and the second hollow shaft is movably sleeved outside the power input shaft; and the first gear train is connected to the power input shaft and the power output shaft, the second gear train is connected to the first hollow shaft and the power output shaft, and the third gear train is connected to the second hollow shaft and the power output shaft. The present disclosure can achieve a multi-gear mode.

## Description

The present disclosure claims priority to Chinese Patent Application No. 202311643192.3, filed on November 29, 2023 and entitled "GEARBOX, HYBRID POWER SYSTEM AND VEHICLE", the content of which is incorporated herein by reference in its entirety.

### TECHNICAL FIELD

The present disclosure relates to the field of vehicle technology, and in particular, to a gearbox, a hybrid power system and a vehicle.

### BACKGROUND

Fossil fuels (such as gasoline and diesel) are primarily used in traditional vehicles to power their engines, and the exhaust emitted from these engines causes environmental pollution. Therefore, new-energy vehicles, which uses pollution-free new energy sources, such as electricity, to replace fossil fuels as power sources have gain a great prospect of development.

In related art, a hybrid power system typically includes an engine, an electric motor, and a gearbox. The gearbox includes a gear train, a power input shaft, a power output shaft, and a synchronizer. The synchronizer is configured to connect the input gears and output gears of different gear trains to the power input shaft and power output shaft. The engine and the electric motor are drivingly connected to the power input shaft.

Because the gear mode of a hybrid power system is related to the number of gear trains within the gearbox, achieving a plurality of gear modes requires a larger number of gear trains. However, this is not conducive to lightweight gearbox design and increases costs. In addition, using synchronizers for shifting can lead to problems such as shifting roughly caused by power interruptions.

### SUMMARY

Embodiments of the present disclosure provide a gearbox, a hybrid power system and a vehicle, which can achieve a plurality of gear modes and a lighter the gearbox. The technical solutions are as follows.

Embodiments of the present disclosure provide a gearbox. The gearbox includes a first clutch assembly, a second clutch assembly, a first gear train, a second gear train, a third gear train, a power input shaft, and a power output shaft, the power input shaft being parallel to the power output shaft; wherein the first clutch assembly includes a first clutch collar, a first hollow shaft, a first clutch, and a second clutch, wherein the first clutch and the second clutch are axially spaced apart within the first clutch collar, the first clutch is connected to an inner wall of the first clutch collar and the first hollow shaft, the second clutch is connected to the inner wall of the first clutch collar and a first end of the power input shaft, the first end of the power input shaft is coaxially inserted into the first clutch collar, and the first hollow shaft is movably sleeved over the power input shaft; the second clutch assembly includes a second clutch collar, a second hollow shaft, a third clutch, and a fourth clutch, wherein the third clutch and the fourth clutch are axially spaced apart within the second clutch collar, the third clutch is connected to an inner wall of the second clutch collar and the second hollow shaft, the fourth clutch is connected to the inner wall of the second clutch collar and a second end of the power input shaft, the second end of the power input shaft is coaxially inserted into the second clutch collar, and the second hollow shaft is movably sleeved over the power input shaft; and the first gear train is connected to the power input shaft and the power output shaft, the second gear train is connected to the first hollow shaft and the power output shaft, the third gear train is connected to the second hollow shaft and the power output shaft, and the power output shaft is configured to be drivingly connected to wheels.

In some embodiments of the present disclosure, each of the first clutch, the second clutch, the third clutch, and the fourth clutch includes a steel plate and a clutch plate; an outer circumferential wall of the steel plate of the first clutch is connected to the inner wall of the first clutch collar, the clutch plate of the first clutch is axially movably sleeved over the first hollow shaft, and the clutch plate of the first clutch is circumferentially locked to the first hollow shaft; an outer circumferential wall of the steel plate of the second clutch is connected to the inner wall of the first clutch collar, and the clutch plate of the second clutch is axially movably sleeved over the first end of the power input shaft, the clutch plate of the second clutch is circumferentially locked to the power input shaft; an outer circumferential wall of the steel plate of the third clutch is connected to the inner wall of the second clutch collar, the clutch plate of the third clutch is axially movably sleeved over the second hollow shaft, and the clutch plate of the third clutch is circumferentially locked to the second hollow shaft; and an outer circumferential wall of the steel plate of the fourth clutch is connected to the inner wall of the second clutch collar, the clutch plate of the fourth clutch is axially movably sleeved over the second end of the power input shaft, and the clutch plate of the fourth clutch is circumferentially locked to the power input shaft.

In some embodiments of the present disclosure, the gearbox further includes a drive shaft (6) and a fifth clutch (6), wherein the fifth clutch (6) is connected to the drive shaft (6), and one end of the drive shaft (6) is coaxially connected to either the first clutch collar or the second clutch collar.

In some embodiments of the present disclosure, the gearbox further includes a fourth gear train, wherein an input gear of the fourth gear train is sleeved over the power output shaft, and an output gear of the fourth gear train is configured to be drivingly connected to the wheels.

Embodiments of the present disclosure provide a hybrid power system. The hybrid power system includes an engine, a first motor, a second motor, and the gearbox as described above; wherein the engine and the first motor are drivingly connected to one of the first clutch collar and the second clutch collar, and the second motor is drivingly connected to the other of the first clutch collar and the second clutch collar.

In some embodiments of the present disclosure, an output shaft of the engine is coaxially connected to the first clutch collar, the first clutch collar is disposed within a bore of a rotor of the first motor, and an outer circumferential wall of the first clutch collar is connected to an inner wall of the rotor of the first motor, the second clutch collar is disposed within a bore of a rotor of the second motor, and an outer circumferential wall of the second clutch collar is connected to an inner wall of the rotor of the second motor.

In some embodiments of the present disclosure, an output shaft of the engine is coaxially connected to the first clutch collar, an output shaft of the first motor is connected to the output shaft of the engine via a gear train, the second clutch collar is disposed within a bore of a rotor of the second motor, and an outer circumferential wall of the second clutch collar is connected to an inner wall of the rotor of the second motor.

In some embodiments of the present disclosure, the hybrid power system further includes a differential, wherein the differential is drivingly connected to the power output shaft.

In some embodiments of the present disclosure, the hybrid power system further includes a power supply assembly, wherein the power supply assembly includes a battery and an inverter, wherein the inverter is connected to the battery, and the first motor and the second motor are connected to the inverter.

Embodiments of the present disclosure provide a vehicle. The vehicle includes a vehicle body and the hybrid power system as described above, wherein the hybrid power system is disposed in the vehicle body.

The technical solutions according to the embodiments of the present disclosure at least achieve the following beneficial effects.

In the gearbox according to the embodiments of the present disclosure, the first clutch collar is connected to the first hollow shaft via the first clutch of the first clutch assembly, and the first hollow shaft is connected to the power output shaft via the second gear train, such that the first gear mode is achieved through the first clutch. The first clutch collar is connected to the power input shaft via the second clutch, and the power input shaft is connected to the power output shaft via the first gear train, such that the second gear mode is achieved through the second clutch.

The second clutch collar is connected to the second hollow shaft via the third clutch of the second clutch assembly, and the second hollow shaft is connected to the power output shaft via the third gear train, such that the third gear mode is achieved through the third clutch. The second clutch collar is connected to the power input shaft via the fourth clutch, and the power input shaft is connected to the power output shaft via the first gear train, such that the second gear mode is also achieved through the fourth clutch.

In addition, the first clutch assembly and the second clutch assembly can be combined to form more gear modes. In the case that the first clutch and the third clutch are engaged, the second gear train and the third gear train are combined to form the fourth gear mode. In the case that the first clutch and the fourth clutch are engaged, the first gear train and the second gear train are combined to form the fifth gear mode. In the case that the second clutch and the third clutch are engaged, the first gear train and the third gear train are combined to form the sixth gear mode.

The gearbox according to the embodiments of the present disclosure achieves six gear modes by configuring three gear trains, thereby achieving the goal of forming more gear modes with fewer gear trains. This not only causes the vehicle to be driven in a plurality of gear modes but also reduces the number of transmission components in the gearbox, thereby achieving a lighter gearbox. In addition, by controlling the two clutch assemblies for shifting, the gearbox achieves smooth shifting without power interruption or impact. In the case that the accelerator is pressed again to request drive power, the gearbox responds quickly.

### BRIEF DESCRIPTION OF THE DRAWINGS

For clearer descriptions of the technical solutions according to the embodiments of the present disclosure, the following briefly introduces the accompanying drawings required for describing the embodiments. Apparently, the accompanying drawings in the following description show merely some examples of the present disclosure, and those of ordinary skill in the art may still derive other drawings from these accompanying drawings without creative efforts.
FIG. 1 is a structural diagram of a gearbox according to some embodiments of the present disclosure;
FIG. 2 is a shifting torque coordination diagram of a clutch assembly according to some embodiments of the present disclosure;
FIG. 3 is a structural diagram of a hybrid power system according to some embodiments of the present disclosure;
FIG. 4 is a structural diagram of a hybrid power system according to some embodiments of the present disclosure;
FIG. 5 is an energy transmission diagram of a hybrid power system according to some embodiments of the present disclosure;
FIG. 6 is an energy transmission diagram of a hybrid power system according to some embodiments of the present disclosure;
FIG. 7 is an energy transmission diagram of a hybrid power system according to some embodiments of the present disclosure;
FIG. 8 is an energy transmission diagram of a hybrid power system according to some embodiments of the present disclosure;
FIG. 9 is an energy transmission diagram of a hybrid power system according to some embodiments of the present disclosure;
FIG. 10 is an energy transmission diagram of a hybrid power system according to some embodiments of the present disclosure;
FIG. 11 is an energy transmission diagram of a hybrid power system according to some embodiments of the present disclosure;
FIG. 12 is an energy transmission diagram of a hybrid power system according to some embodiments of the present disclosure;
FIG. 13 is an energy transmission diagram of a hybrid power system according to some embodiments of the present disclosure;
FIG. 14 is an energy transmission diagram of a hybrid power system according to some embodiments of the present disclosure;
FIG. 15 is an energy transmission diagram of a hybrid power system according to some embodiments of the present disclosure;
FIG. 16 is an energy transmission diagram of a hybrid power system according to some embodiments of the present disclosure;
FIG. 17 is an energy transmission diagram of a hybrid power system according to some embodiments of the present disclosure;
FIG. 18 is an energy transmission diagram of a hybrid power system according to some embodiments of the present disclosure;
FIG. 19 is an energy transmission diagram of a hybrid power system according to some embodiments of the present disclosure; and
FIG. 20 is an energy transmission diagram of a hybrid power system according to some embodiments of the present disclosure.

The symbols in the figures are illustrated as follows:
10-engine; 11-first motor; 12-second motor;
21-first clutch assembly;
211-first clutch collar; 212-first hollow shaft; 213-first clutch; 214-second clutch;
22-second clutch assembly;
221-second clutch collar; 222-second hollow shaft; 223-third clutch; 224-fourth clutch;
201-steel plate; 202-clutch plate;
31-first gear train; 32-second gear train; 33-third gear train; 34-fourth gear train;
41-power input shaft; 42-power output shaft;
61-drive shaft; 62-fifth clutch; and
70-differential.

### DETAILED DESCRIPTION

For clearer descriptions of the objectives, technical solutions, and advantages of the present disclosure, the embodiments of the present disclosure are further described in detail below with reference to the accompanying drawings.

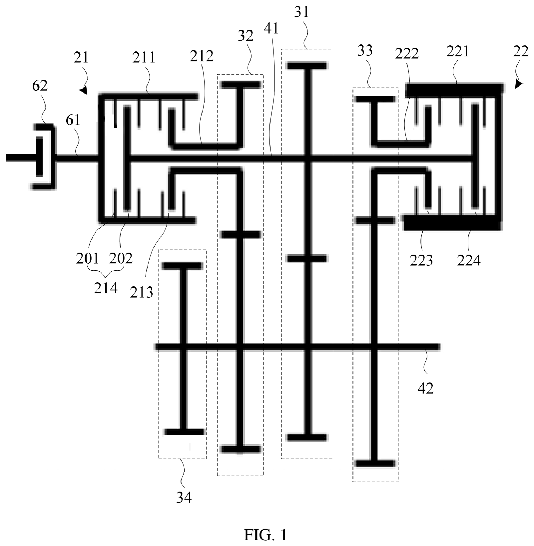

FIG. 1 is a structural diagram of a gearbox according to some embodiments of the present disclosure. As shown in FIG. 1, the gearbox includes a first clutch assembly 21, a second clutch assembly 22, a first gear train 31, a second gear train 32, a third gear train 33, a power input shaft 41, and a power output shaft 42, wherein the power input shaft 41 is parallel to the power output shaft 42.

As shown in FIG. 1, the first clutch assembly 21 includes a first clutch collar 211, a first hollow shaft 212, a first clutch 213, and a second clutch 214. The first clutch 213 and second clutch 214 are axially spaced apart and disposed within the first clutch collar 211. The first clutch 213 is connected to the inner wall of the first clutch collar 211 and the first hollow shaft 212, and the second clutch 214 is connected to the inner wall of the first clutch collar 211 and the first end of the power input shaft 41. The first end of the power input shaft 41 is coaxially inserted into the first clutch collar 211, and the first hollow shaft 212 is movably sleeved over the power input shaft 41.

As shown in FIG. 1, the second clutch assembly 22 includes a second clutch collar 221, a second hollow shaft 222, a third clutch 223, and a fourth clutch 224. The third clutch 223 and the fourth clutch 224 are axially spaced apart and disposed within the second clutch collar 221, the third clutch 223 is connected to the inner wall of the second clutch collar 221 and the second hollow shaft 222, and the fourth clutch 224 is connected to the inner wall of the second clutch collar 221 and the second end of the power input shaft 41. The second end of the power input shaft 41 is coaxially inserted into the second clutch collar 221, and the second hollow shaft 222 is movably sleeved over the power input shaft 41.

As shown in FIG. 1, the first gear train 31 is connected to the power input shaft 41 and the power output shaft 42, the second gear train 32 is connected to the first hollow shaft 212 and the power output shaft 42, the third gear train 33 is connected to the second hollow shaft 222 and the power output shaft 42, and the power output shaft 42 is configured to be drivingly connected to the wheels.

In the gearbox according to the present disclosure, the first clutch collar 211 is connected to the first hollow shaft 212 via the first clutch 213of the first clutch assembly 21, and the first hollow shaft 212 is connected to the power output shaft 42 via the second gear train 32, such that the first gear mode is achieved through the first clutch 213. The first clutch collar 211 is connected to the power input shaft 41 via the second clutch 214, and the power input shaft 41 is connected to the power output shaft 42 via the first gear train 31, such that the second gear mode is achieved through the second clutch 214.

The second clutch collar 221 is connected to the second hollow shaft 22 via the third clutch 223 of the second clutch assembly 22, and the second hollow shaft 222 is connected to the power output shaft 42 via the third gear train 33, such that the third gear mode is achieved through the third clutch 223. The second clutch collar 221 is connected to the power input shaft 41 via the fourth clutch 224, and the power input shaft 41 is connected to the power output shaft 42 via the first gear train 31, such that the second gear mode is also achieved through the fourth clutch 224.

In addition, the first clutch assembly 21 and the second clutch assembly 22 can be combined to form more gear modes. In the case that the first clutch 213 and the third clutch 223 are engaged, the second gear train 32 and the third gear train 33 are combined to form the fourth gear mode. In the case that the first clutch 213 and the fourth clutch 224 are engaged, the first gear train 31 and the second gear train 32 are combined to form the fifth gear mode. In the case that the second clutch 214 and the third clutch 223 are engaged, the first gear train 31 and the third gear train 33 are combined to form the sixth gear mode.

The gearbox according to the embodiments of the present disclosure achieves six gear modes by configuring three gear trains, thereby achieving the goal of forming more gear modes with fewer gear trains. This not only causes the vehicle to be driven in a plurality of gear modes but also reduces the number of transmission components in the gearbox, thereby achieving a lighter gearbox. In addition, by controlling the two clutch assemblies for shifting, the gearbox achieves smooth shifting without power interruption or impact. In the case that the accelerator is pressed again to request drive power, the gearbox responds quickly.

In the embodiments of the present disclosure, each of the first gear train 31, the second gear train 32, and the third gear train 33 includes at least an input gear and an output gear, wherein the input gear and output gear are drivingly connected to transmit power from the input gear to the output gear.

Optionally, in the first gear train 31, the second gear train 32, and the third gear train 33, the input gear and output gear are directly engaged, or at least one connecting gear is disposed between the input gear and output gear.

It should be noted that the specific number of gears in the first gear train 31, second gear train 32, and third gear train 33 are determined based on actual requirements.

Optionally, as shown in FIG. 1, each of the first clutch 213, the second clutch 214, the third clutch 223, and the fourth clutch 224 includes a steel plate 201 and a clutch plate 202.

As shown in FIG. 1, the outer circumferential wall of the steel plate 201 of the first clutch 213 is connected to the inner wall of the first clutch collar 211, the clutch plate 202 of the first clutch 213 is axially movably sleeved over the first hollow shaft 212, and the clutch plate 202 of the first clutch 213 is circumferentially locked to the first hollow shaft 212.

For example, an axially extending groove is disposed on the inner wall of the first clutch collar 211, and a protrusion is disposed on the outer circumferential wall of the steel plate 201 of the first clutch 213. The protrusion can slide axially along the first clutch collar 211 within the groove, thereby achieving circumferential locking of the steel plate 201 upon being installed on the first clutch collar 211.

For example, an axially extending groove is disposed on the outer wall of the first hollow shaft 212, and a protrusion is disposed on the wall of the inner bore of the clutch plate 202 of the first clutch 213. The protrusion can slide axially along the first hollow shaft 212 within the groove, thereby achieving circumferential locking of the clutch plate 202 to the first hollow shaft 212.

In the case that the first clutch 213 needs to be engaged, the steel plate 201 and the clutch plate 202 are pressed together by the drive device, such that the first hollow shaft 212 is drivingly connected to the first clutch collar 211.

As shown in FIG. 1, the outer circumferential wall of the steel plate 201 of the second clutch 214 is connected to the inner wall of the first clutch collar 211, the clutch plate 202 of the second clutch 214 is axially movably sleeved over the first end of the power input shaft 41, and the clutch plate 202 of the second clutch 214 is circumferentially locked to the power input shaft 41.

For example, a protrusion is disposed on the outer circumferential wall of the steel plate 201 of the second clutch 214, the protrusion can slide axially along the first clutch collar 211 within the groove on the inner wall thereof, thereby achieving circumferential locking of the steel plate 201 upon being installed on the first clutch collar 211.

For example, an axially extending groove is disposed at the first end of the power input shaft 41, and a protrusion is disposed on the inner wall of the bore of the clutch plate 202 of the second clutch 214. The protrusion can slide axially along the power input shaft 41 within the groove, thereby achieving circumferential locking of the clutch plate 202 to the power input shaft 41.

In the case that the second clutch 214 needs to be engaged, the steel plate 201 and the clutch plate 202 are pressed together by the drive device, such that the power input shaft 41 is drivingly connected to the first clutch collar 211.

As shown in FIG. 1, the outer circumferential wall of the steel plate 201 of the third clutch 223 is connected to the inner wall of the second clutch collar 221, the clutch plate 202 of the third clutch 223 is axially movably sleeved over the second hollow shaft 222, and the clutch plate 202 of the third clutch 223 is circumferentially locked to the second hollow shaft 222.

For example, an axially extending groove is disposed on the inner wall of the second clutch collar 221, and a protrusion is disposed on the outer circumferential wall of the steel plate 201 of the third clutch 223. The protrusion can slide axially along the second clutch collar 221 within the groove, thereby achieving circumferential locking of the steel plate 201 upon being installed on the second clutch collar 221.

For example, an axially extending groove is disposed on the second hollow shaft 222, and a protrusion is disposed on the inner wall of the clutch plate 202 of the third clutch 223. The protrusion can slide axially along the second hollow shaft 222 within the groove, thereby achieving circumferential locking of the clutch plate 202 to the second hollow shaft 222.

In the case that the third clutch 223 needs to be engaged, the steel plate 201 and the clutch plate 202 are pressed together by a drive device, such that the second hollow shaft 222 is drivingly connected to the first clutch collar 211.

As shown in FIG. 1, the outer circumferential wall of the steel plate 201 of the fourth clutch 224 is connected to the inner wall of the second clutch collar 221, the clutch plate 202 of the fourth clutch 224 is axially movably sleeved over the second end of the power input shaft 41, and the clutch plate 202 of the fourth clutch 224 is circumferentially locked to the power input shaft 41.

For example, a protrusion is disposed on the outer circumferential wall of the steel plate 201 of the fourth clutch 224. The protrusion can slide axially along the second clutch collar 221 within the groove on the inner wall of the fourth clutch collar, thereby achieving circumferential locking of the steel plate 201 upon being installed on the second clutch collar 221.

For example, an axially extending groove is disposed on the second end of the power input shaft 41, and a protrusion is disposed on the inner hole wall of the clutch plate 202 of the fourth clutch 224. The protrusion can slide axially along the power input shaft 41 within the groove, thereby achieving circumferential locking of the clutch plate 202 to the power input shaft 41.

In the case that the fourth clutch 224 needs to be engaged, the steel plate 201 and the clutch plate 202 are pressed together by a drive device, such that the power input shaft 41 is drivingly connected to the second clutch collar 221.

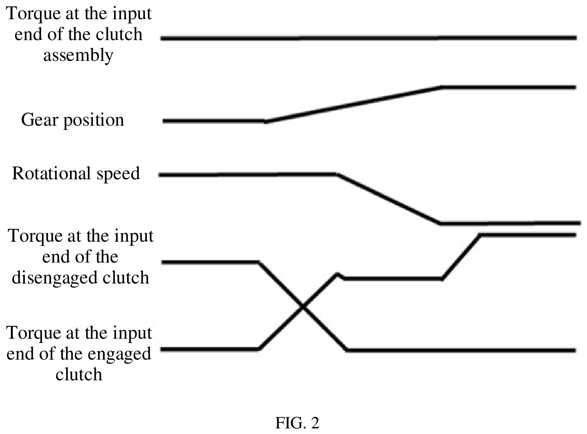

FIG. 2 is a shifting torque coordination diagram of a clutch assembly according to some embodiments of the present disclosure. As shown in FIG. 2, in the case that the torque input from the input end of the clutch assembly is constant, as the shift position increases, the rotational speed at the output end of the clutch assembly decreases.

The input end of the clutch assembly is a clutch collar, and the output end of the clutch assembly is a power shaft or a hollow shaft.

As shown in FIG. 2, the torque at the input end of the to-be-engaged clutch has change three stages. In the first stage, the to-be-disengaged clutch exchanges torque with the to-be-engaged clutch, and the torque is transmitted from the input end of the to-be-disengaged clutch to the to-be-engaged clutch. In the second stage, the to-be-engaged clutch controls the amount of torque transmitted through clutch pressure, which smoothly brings the speed at the input end to the target speed, such that the speeds at both ends are synchronized in the case that the clutch is engaged, thereby preventing impact. In the third stage, upon rotational speed synchronization, the to-be-engaged clutch rapidly increases pressure to lock the clutch, which prevents slippage.

Optionally, as shown in FIG. 1, the gearbox further includes a drive shaft 61 and a fifth clutch 62. The fifth clutch 62 is connected to the drive shaft 61, and one end of the drive shaft 61 is coaxially connected to the first clutch collar 211 or the second clutch collar 221.

For example, as shown in FIG. 1, one end of the drive shaft 61 is coaxially connected to the closed end of the first clutch collar 211. The drive shaft 61 is configured to be drivingly connected to the output shaft of the power source, such that the power from the power source can be transmitted to the clutch assembly via the drive shaft 61.

A fifth clutch 62 is disposed on the drive shaft 61. The steel plate of the fifth clutch is connected to one end of the drive shaft, and the clutch plate of the fifth clutch is drivingly connected to the output shaft of the power source. In this way, the fifth clutch interrupts the power transmission between the power source and the clutch assembly, such that the power from the power source is transmitted to the clutch assembly when needed.

Optionally, as shown in FIG. 1, the gearbox further includes a fourth gear train 34, the input gear of the fourth gear train 34 is sleeved over the power output shaft 42, and the output gear of the fourth gear train 34 is configured to be drivingly connected to the wheels.

By configuring the fourth gear train 34, the power from the power output shaft 42 is transmitted via the input gear of the fourth gear train 34 to the output gear, and then the power is transmitted via the output gear of the fourth gear train 34 to the wheels to drive the wheels to rotate.

In some embodiments of the present disclosure, the fourth gear train 34 includes at least an input gear and an output gear, and the input gear is drivingly connected to the output, such that the power is transmitted from the input gear to the output gear.

Optionally, in the fourth gear train 34, the input gear is directly engaged with output gear, or at least one connecting gear is disposed between the input gear and output gear.

It should be noted that the specific number of gears in the fourth gear train 34 are determined based on actual requirements.

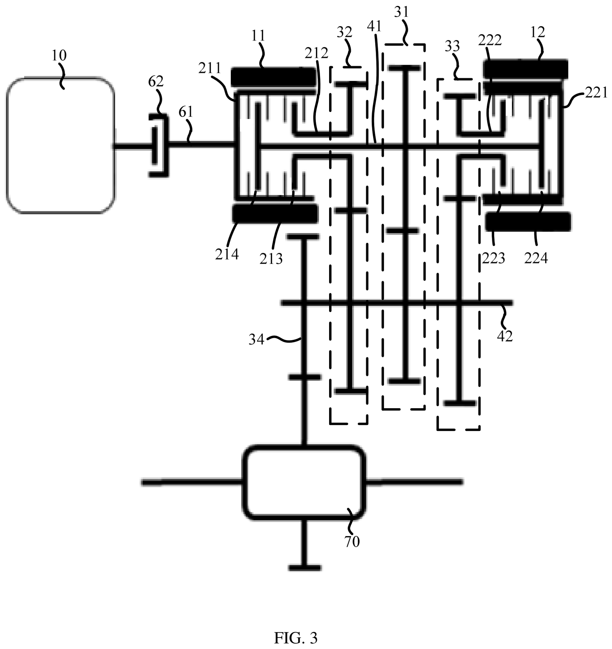

FIG. 3 is a structural diagram of a hybrid power system according to some embodiments of the present disclosure. As shown in FIG. 3, the hybrid power system includes an engine 10, a first motor 11, a second motor 12, and the gearbox as described above.

The engine 10 and the first motor 11 are drivingly connected to one of the first clutch collar 211 and the second clutch collar 221, and the second motor 12 is drivingly connected to the other of the first clutch collar 211 and the second clutch collar 221.

In some embodiments, as shown in FIG. 2, the output shaft of engine 10 is coaxially connected to first clutch collar 211. The first clutch collar 211 is disposed within the inner bore of the rotor of first motor 11, and the outer circumferential wall of first clutch collar 211 is connected to the inner wall of the rotor of first motor 11. The second clutch collar 221 is disposed within the inner bore of the rotor of the second motor 12, and the outer circumferential wall of the second clutch collar 221 is connected to the inner wall of the rotor of the second motor 12.

In the above embodiment, the gearbox of the hybrid power system further includes a drive shaft 61 and a fifth clutch 62. One end of the drive shaft 61 is coaxially connected to the first clutch collar 211, and the fifth clutch 62 is connected between the output shaft of the engine 10 and the other end of the drive shaft 61.

In the above implementation, the first clutch assembly 21 is disposed in the rotor of the first motor 11, and the second clutch assembly 22 is disposed in the rotor of the second motor 12. By arranging the clutch assembly in the rotor of the motor, the clutch assemblies and motors are integrated into a single drive structure, which effectively reduces the size of the hybrid power system and achieving a lightweight design.

In some embodiments of the present disclosure, the first motor 11 connected to the same clutch assembly as the engine 10 typically functions as a generator. In the case that the engine 10 outputs power, a portion of the power is transmitted via the first clutch collar 211 to the rotor of the first motor 11 to drive the first motor 11 to generate electricity.

The second motor 12 functions as a drive motor to output power and drive the vehicle.

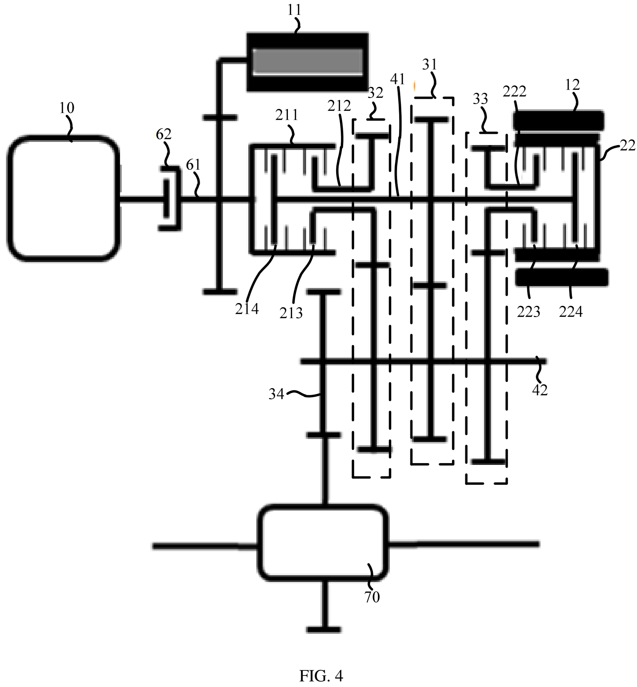

In another embodiment, FIG. 4 is a structural diagram of a hybrid power system according to some embodiments of the present disclosure. As shown in FIG. 4, the output shaft of the engine 10 is coaxially connected to the first clutch collar 211. The output shaft of the first motor 11 is connected to the output shaft of the engine 10 via a gear train. The second clutch collar 221 is disposed within the inner bore of the rotor of the second motor 12, and the outer circumferential wall of the second clutch collar 221 is connected to the inner wall of the rotor of the second motor 12.

In the above implementation, the rotor of the first motor 11 is not directly sleeved over the clutch collar of the first clutch assembly 21, but is instead connected to the output shaft of the engine 10 via a gear train. Because the size of the rotor of the first motor 11 is not needed to be designed, and the rotor of the first motor 11 is sleeved over the first clutch collar 211, typically, the motor can be directly connected to the output shaft of the engine 10 via a gear train, such that the assembly difficulty of the gearbox is reduced.

Optionally, as shown in FIGS. 3 and 4, the hybrid power system further includes a differential 70, and the differential 70 is drivingly connected the power output shaft 42.

In some embodiments of the present disclosure, the input gear of the differential 70 is engaged with the output gear of the fourth gear train 34, thereby receiving the power transmitted from the power output shaft 42, such that the purpose of driving the wheels to rotate is achieved.

The differential 70 causes the wheels connected to the output shaft of the differential 70 to rotate at different speeds. In the case that the vehicle turns, the turning radius of the inner wheels is different from the turning radius of the outer wheels, and the outer wheels has a larger turning radius than the inner wheels. In this way, the outer wheels need to rotate at a higher speed than the inner wheels during when turning. The differential 70 causes the two wheels to rotate at different speeds, thereby achieving the speed difference between the two wheels.

Optionally, the hybrid power system further includes a power supply assembly, the power supply assembly includes a battery and an inverter, the inverter is connected to the battery, and the first motor 11 and the second motor 12 are connected to the inverter.

For example, the power supply assembly includes two inverters, each of the two inverters is connected to the battery, the first motor 11 is connected to one of the two inverters, and the second motor 12 is connected to the other of the two inverters.

By providing two inverters, one is configured to connect the battery and the first motor 11, and the other is configured to connect the battery and the second motor 12. The battery is a rechargeable battery, and the inverter is disposed on the output circuit of the battery to convert direct current output from the battery into three-phase alternating current to drive the first motor 11 or the second motor 12.

Taking the hybrid power system illustrated in FIG. 3 as an example, the various power modes of the hybrid power system are described as follows.

In the case that the hybrid power system is in a pure electric mode, the hybrid power system includes eight power transmission modes.

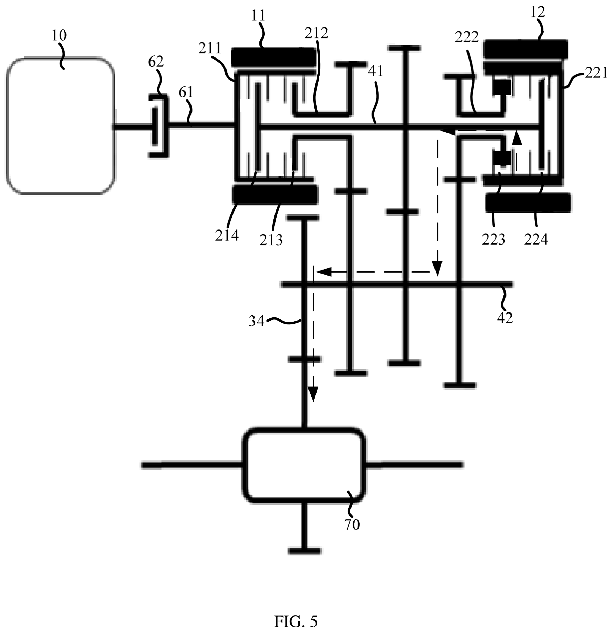

The first mode is shown in FIG. 5. The first clutch 213 and the second clutch 214 of the first clutch assembly 21 are disengaged. The third clutch 223 of the second clutch assembly 22 is engaged, and the fourth clutch 224 is disengaged, such that the power from the second motor 12 is transmitted sequentially through the third clutch 223, the second hollow shaft 222, and the third gear train 33 to the power output shaft 42, thereby driving the wheels.

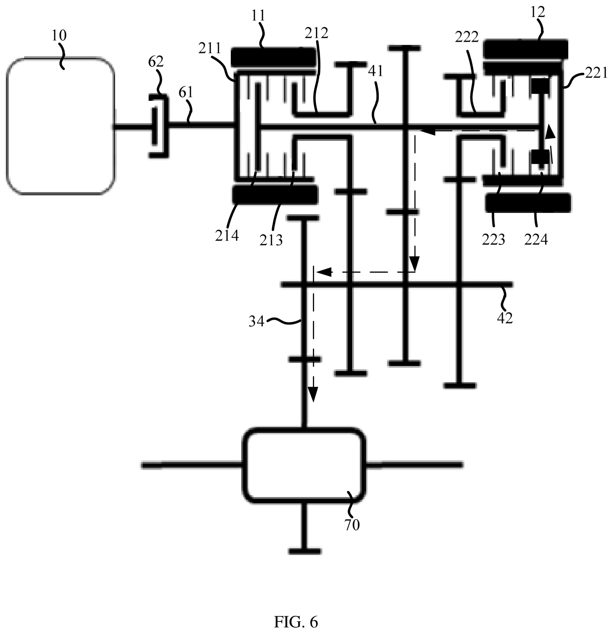

The second mode is shown in FIG. 6. The first clutch 213 and the second clutch 214 of the first clutch assembly 21 are disengaged. The third clutch 223 of the second clutch assembly 22 is disengaged, and the fourth clutch 224 is engaged, such that the power from the second motor 12 is transmitted sequentially through the fourth clutch 224, the power input shaft 41, and the first gear train 31 to the power output shaft 42, thereby driving the wheels.

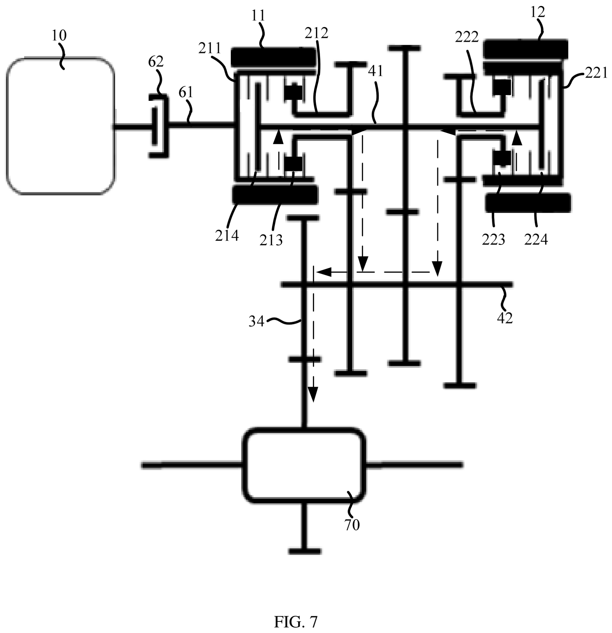

The third mode is shown in FIG. 7. The first clutch 213 of the first clutch assembly 21 is engaged, and the second clutch 214 is disengaged, such that the power from the first motor 11 is transmitted sequentially through the first clutch 213, the first hollow shaft 212, and the second gear train 32 to the power output shaft 42. The third clutch 223 of the second clutch assembly 22 is engaged, and the fourth clutch 224 is disengaged, such that the power from the second motor 12 is transmitted sequentially through the third clutch 223, the second hollow shaft 222, and the third gear train 33 to the power output shaft 42. In this way, the power from the first motor 11 and the second motor 12 is coupled at the power output shaft 42 and transmitted to the wheels for driving the wheels.

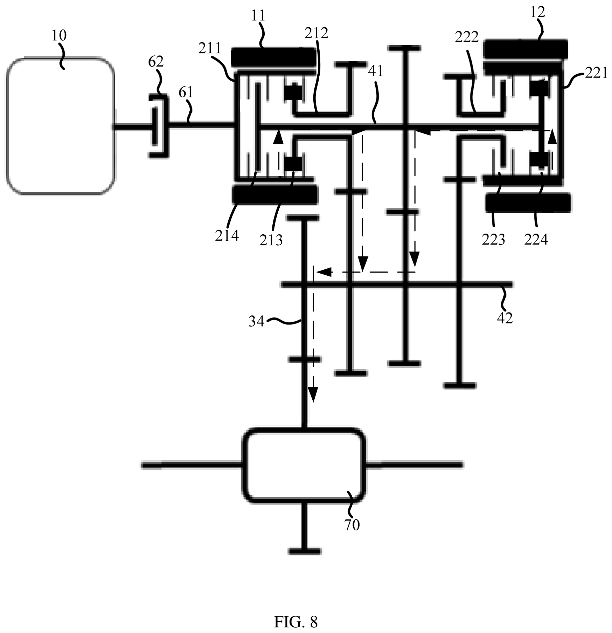

The fourth mode is shown in FIG. 8. The first clutch 213 of the first clutch assembly 21 is engaged, and the second clutch 214 is disengaged, such that the power from the first motor 11 is transmitted sequentially through the first clutch 213, the first hollow shaft 212, and the second gear train 32 to the power output shaft 42. The third clutch 223 of the second clutch assembly 22 is disengaged, and the fourth clutch 224 is engaged, such that the power from the second motor 12 is transmitted sequentially through the fourth clutch 224, the power input shaft 41, and the first gear train 31 to the power output shaft 42. In this way, the power from the first motor 11 and the second motor 12 is coupled at the power output shaft 42 and transmitted to the wheels for driving the wheels.

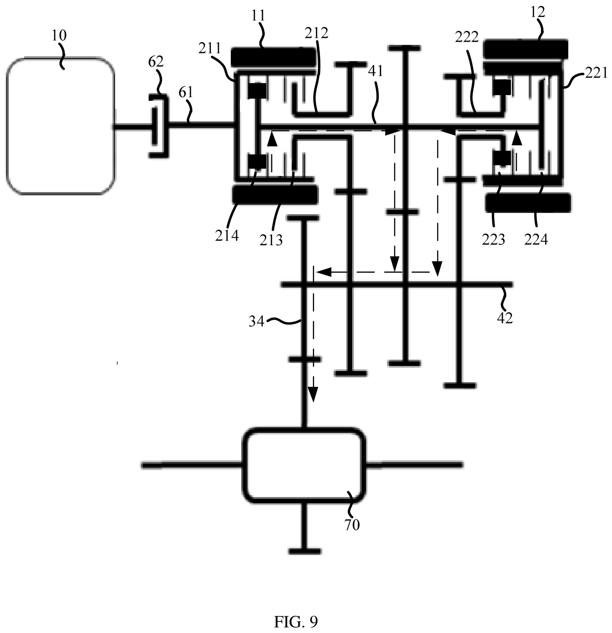

The fifth mode is shown in FIG. 9. The first clutch 213 of the first clutch assembly 21 is disengaged, and the second clutch 214 is engaged, such that the power from the first motor 11 is transmitted sequentially through the second clutch 214, the power input shaft 41, and the first gear train 31 to the power output shaft 42. The third clutch 223 of the second clutch assembly 22 is engaged, and the fourth clutch 224 is disengaged, such that the power from the second motor 12 is transmitted sequentially through the third clutch 223, the second hollow shaft 222, and the third gear train 33 to the power output shaft 42. In this way, the power from the first motor 11 and the second motor 12 is coupled at the power output shaft 42 and transmitted to the wheels for driving the wheels.

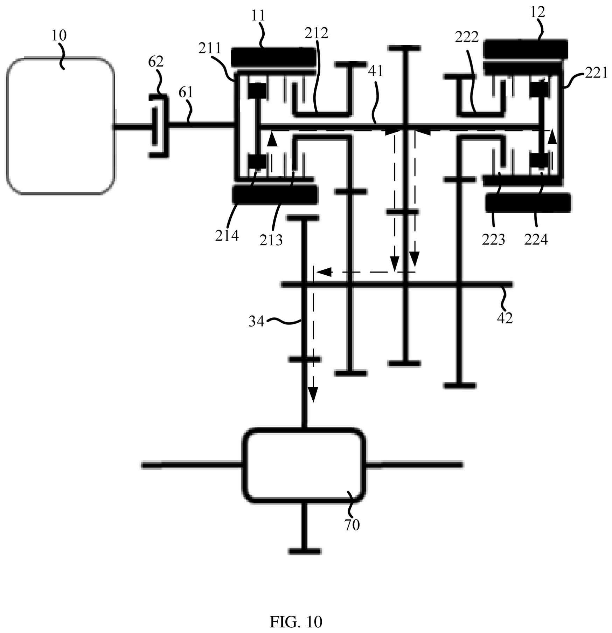

The sixth mode is shown in FIG. 10. The first clutch 213 of the first clutch assembly 21 is disengaged, and the second clutch 214 is engaged, such that the power from the first motor 11 is transmitted sequentially through the second clutch 214, the power input shaft 41, and the first gear train 31 to the power output shaft 42. The third clutch 223 of the second clutch assembly 22 is disengaged, and the fourth clutch 224 is engaged, such that the power from the second motor 12 is transmitted sequentially through the fourth clutch 224, the power input shaft 41, and the first gear train 31 to the power output shaft 42. In this way, the power from the first motor 11 and the second motor 12 is coupled at the power output shaft 42 and transmitted to the wheels for driving the wheels.

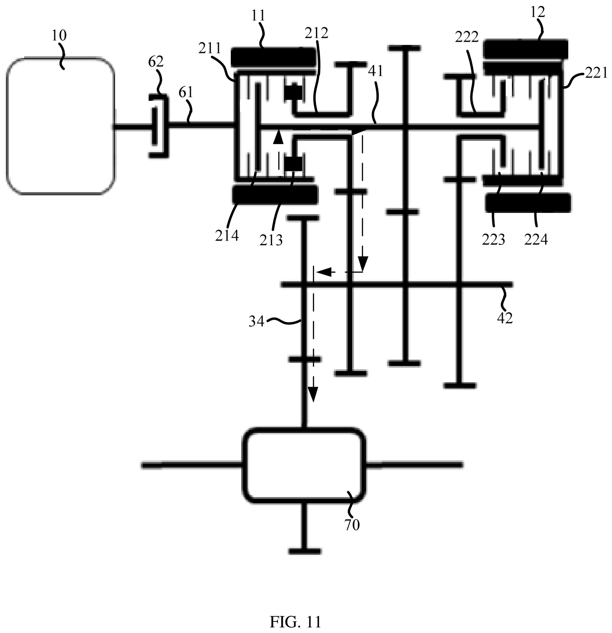

The seventh mode is shown in FIG. 11. The first clutch 213 of the first clutch assembly 21 is engaged and the second clutch 214 is disengaged, so that the power from the first motor 11 can be transmitted to the power output shaft 42 through the first clutch 213, the first hollow shaft 212, and the second gear train 32 in sequence. The third clutch 223 and fourth clutch 224 of the second clutch assembly 22 are both disengaged. In this way, the wheels are driven by the first motor 11.

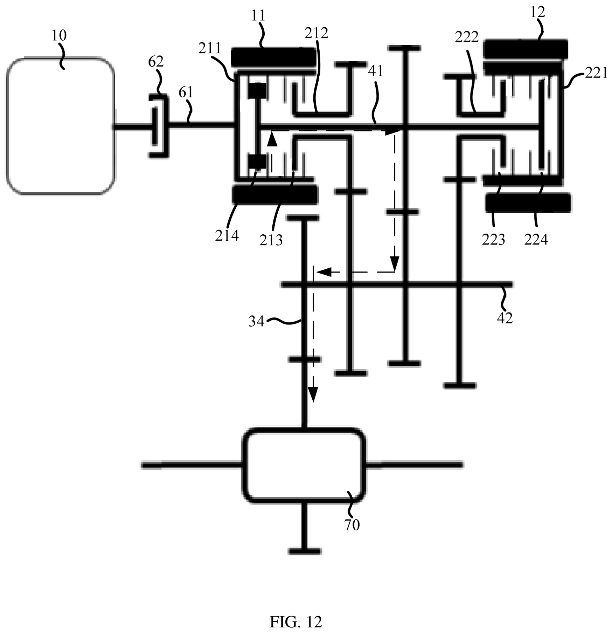

The eighth mode is shown in FIG. 12. The first clutch 213 of the first clutch assembly 21 is disengaged, and the second clutch 214 is engaged, such that the power from the first motor 11 is transmitted sequentially through the second clutch 214, the power input shaft 41, and the first gear train 31 to the power output shaft 42. The third clutch 223 and fourth clutch 224 of the second clutch assembly 22 are disengaged. In this way, the wheels are driven by the first motor 11.

In the case that the hybrid power system is in series mode of the hybrid mode, the hybrid power system includes two power transmission modes.

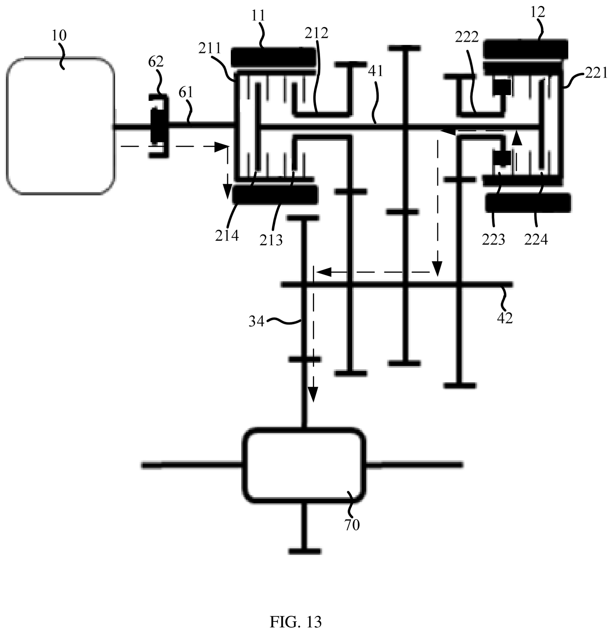

The first mode is shown in FIG. 13. The first clutch 213 and the second clutch 214 are disengaged, and the power from the engine 10 is transmitted to the first clutch collar 211 to drive the first motor 11 to generate electricity. The third clutch 223 engages, and the fourth clutch 224 disengages, such that the power from the second motor 12 is transmitted sequentially through the third clutch 223, the second hollow shaft 222, and the third gear train 33 to the power output shaft 42. In this way, the engine 10 drives the first motor 11 to generate electricity, which is stored in the power supply component, the power supply component outputs electrical energy to drive the second motor 12, and the second motor 12 drives the wheels.

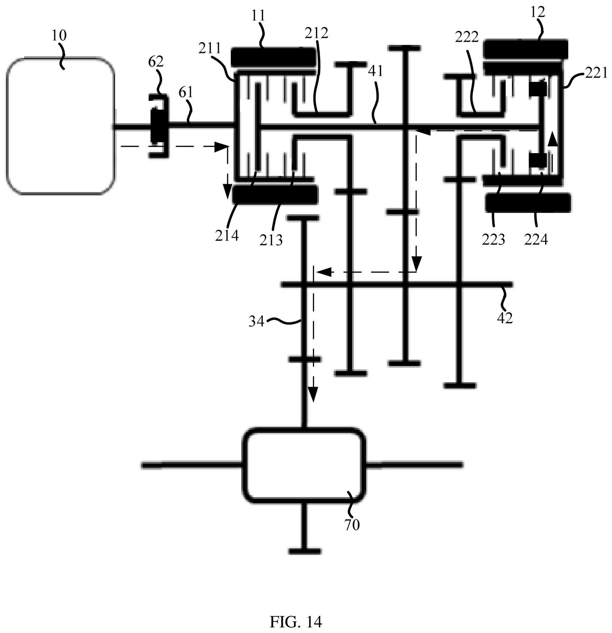

The second mode is shown in FIG. 14. The first clutch 213 and the second clutch 214 are disengaged, and the power from the engine 10 is transmitted to the first clutch collar 211 to drive the first motor 11 to generate electricity. The third clutch 223 is disengaged, and the fourth clutch 224 is engaged, such that the power from the second motor 12 is transmitted sequentially through the fourth clutch 224, the power input shaft 41, and the first gear train 31 to the power output shaft 42. In this way, the engine 10 drives the first motor 11 to generate electricity, which is stored in the power supply unit, the power supply unit outputs electrical energy to drive the second motor 12, and the second motor 12 drives the wheels.

In the case that the remaining electricity of the power supply unit is low or the driver needs stronger power by pressing the accelerator, the hybrid power system is switched to the parallel mode of the hybrid mode. The parallel mode includes the following power transmission modes.

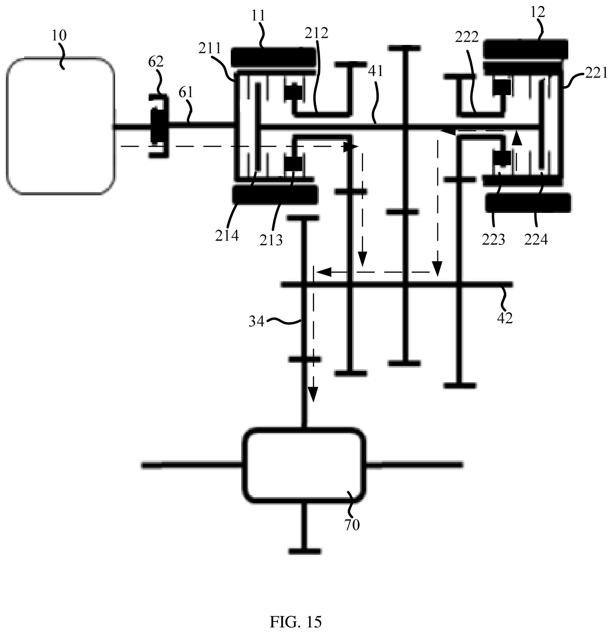

The first mode is shown in FIG. 15. The first clutch 213 is engaged, and the second clutch 214 is disengaged, such that the power from the engine 10 and the first motor 11 is transmitted sequentially through the first clutch 213, the first hollow shaft 212, and the second gear train 32 to the power output shaft 42. Alternatively, the power from the engine 10 is transmitted sequentially through the first clutch 213, the first hollow shaft 212, and the second gear train 32 to the power output shaft 42.

The third clutch 223 is engaged, and the fourth clutch 224 is disengaged, enabling the power from the second motor 12 to be transmitted sequentially through the third clutch 223, the second hollow shaft 222, and the third gear train 33 to the power output shaft 42, thereby driving the wheels.

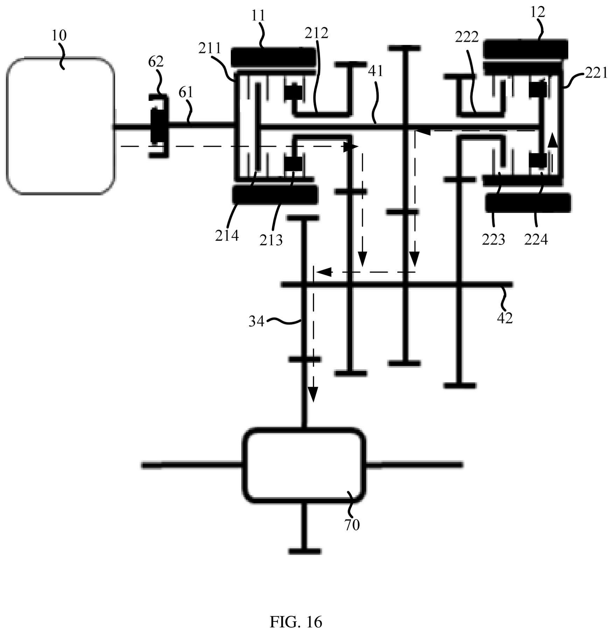

The second mode is shown in FIG. 16. The first clutch 213 is engaged, and the second clutch 214 is disengaged, such that the power from the engine 10 and the first motor 11 is transmitted sequentially through the first clutch 213, the first hollow shaft 212, and the second gear train 32 to the power output shaft 42. Alternatively, the power from the engine 10 is transmitted to the power output shaft 42 through the first clutch 213, the first hollow shaft 212, and the second gear train 32 to the power output shaft 42.

The third clutch 223 is disengaged, and the fourth clutch 224 is engaged, such that the power from the second motor 12 is transmitted sequentially through the fourth clutch 224, the power input shaft 41, and the first gear train 31 to the power output shaft 42 to drive the wheels.

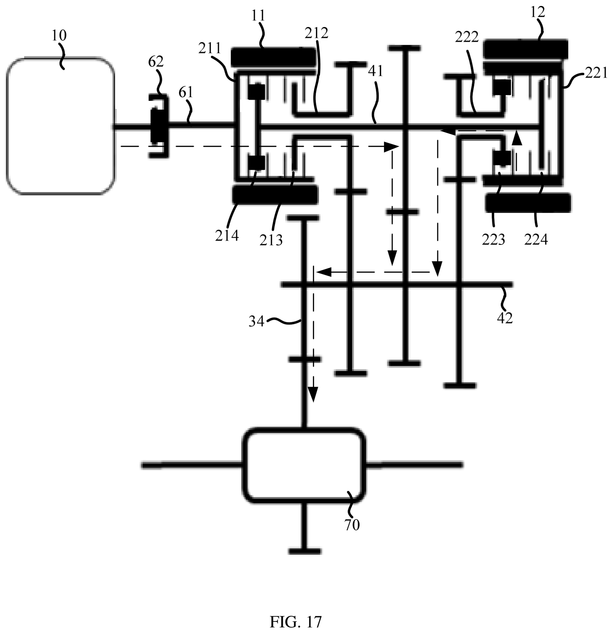

The third mode is shown in FIG. 17. The first clutch 213 is disengaged, and the second clutch 214 is engaged, such that the power from the engine 10 and the first motor 11 is transmitted sequentially through the second clutch 214, the power input shaft 41, and the first gear train 31 to the power output shaft 42. Alternatively, the power from the engine 10 is transmitted sequentially through the second clutch 214, the power input shaft 41, and the first gear train 31 to the power output shaft 42.

The third clutch 223 is engaged, and the fourth clutch 224 is disengaged, such that the power from the second motor 12 is transmitted sequentially through the third clutch 223, the second hollow shaft 222, and the third gear train 33 to the power output shaft 42, thereby driving the wheels.

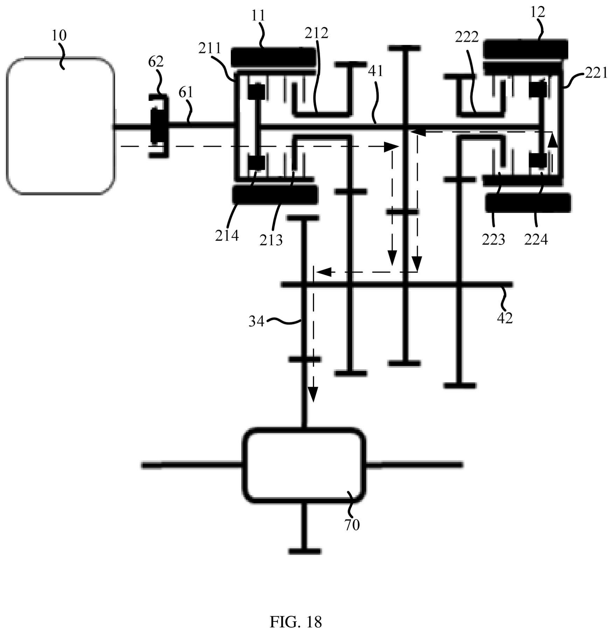

The fourth mode is shown in FIG. 18. The first clutch 213 is disengaged, and the second clutch 214 is engaged, such that the power from the engine 10 and the first motor 11 is transmitted sequentially through the second clutch 214, the power input shaft 41, and the first gear train 31 to the power output shaft 42. Alternatively, the power from the engine 10 is transmitted sequentially through the second clutch 214, the power input shaft 41, and the first gear train 31 to the power output shaft 42.

The third clutch 223 is disengaged, and the fourth clutch 224 is engaged, such that the power from the second motor 12 is transmitted sequentially through the fourth clutch 224, the power input shaft 41, and the first gear train 31 to the power output shaft 42, thereby driving the wheels.

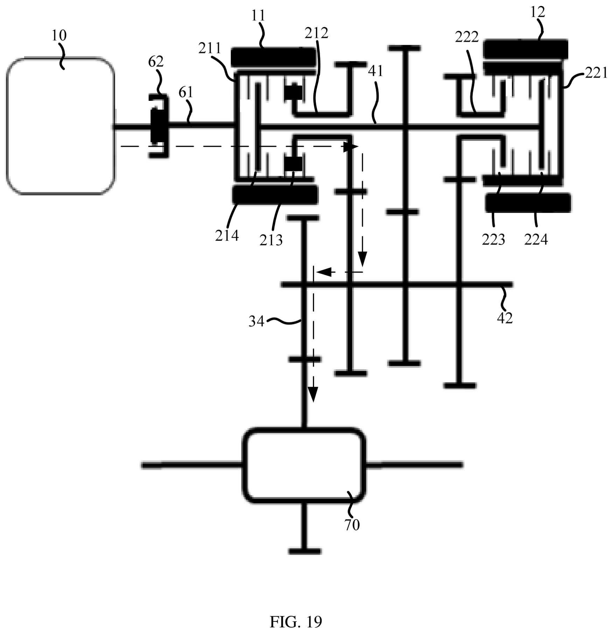

The fifth mode is shown in FIG. 19. The first clutch 213 is engaged, and the second clutch 214 is disengaged, such that the power from the engine 10 and the first motor 11 is transmitted sequentially through the first clutch 213, the first hollow shaft 212, and the second gear train 32 to the power output shaft 42. In this way, the third clutch 223 and the fourth clutch 224 are, and the wheels are driven by the engine 10 and the first motor 11.

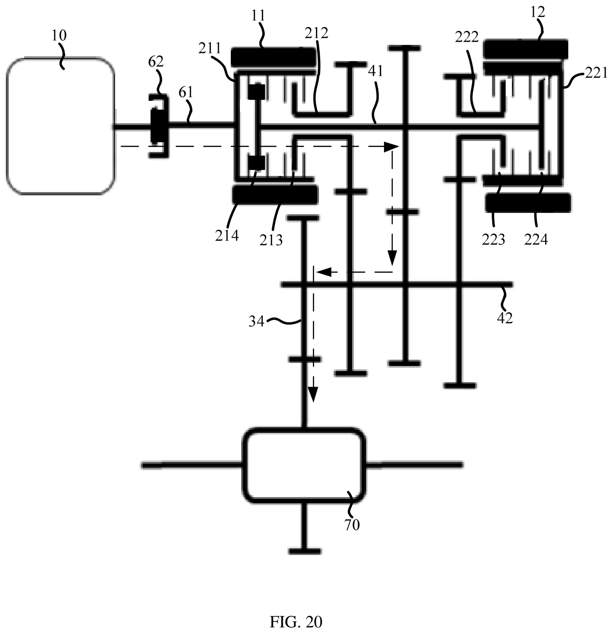

The sixth mode is shown in FIG. 20. The first clutch 213 is disengaged, and the second clutch 214 is engaged, such that the power from the engine 10 and the first motor 11 is transmitted sequentially through the second clutch 214, the power input shaft 41, and the first gear train 31 to the power output shaft 42. In this way, the third clutch 223 and the fourth clutch 224 are, and the wheels are driven by the engine 10 and the first motor 11.

In some embodiments of the present disclosure, in the case that the first clutch is engaged and the third clutch is engaged, the mode is suitable for low-speed or medium-speed operating conditions. In the case that the second clutch is engaged and the third clutch is engaged, the mode is suitable for medium-speed or high-speed operating conditions. During high-speed operation, in the case that the rapid acceleration is needed, the first clutch is engaged and the third clutch is engaged to output greater power.

The hybrid power system according to the present disclosure is a simple and compact transmission system specifically designed for hybrid vehicles, which achieves a plurality of operating modes and automatic shifting between two gear ratios, thereby improving the energy efficiency of the vehicle, the power performance, and the economic performance. The front-end power and rear-end power in the present disclosure have two gear ratios, such that a plurality of gear positions are achieves. By controlling the slippage of the front-end dual-clutch assembly and rear-end dual-clutch assembly, the gear shifting is performed in turn, such that smooth shifting without power interruption or impact is achieved. In the case that the accelerator is pressed again to request drive power, the gearbox responds quickly.

The hybrid power system according to the present disclosure has fewer components, a compact structure, and is easy to integrate into the vehicle. The hybrid power system can operate in a plurality of modes, including dual-motor pure electric drive, series drive, parallel drive, and engine-only drive. The hybrid power system also supports driving charging, stationary power generation, regenerative braking, and no power interruption during gear shifting. Especially when overtaking at high speeds, the hybrid power system can achieve a power downshift function, utilizing the characteristics of high engine speed and high torque to meet power requirements. Unlike other hybrid system, the motor also has two gear ratios, which can break through the limitations of motor speed at high speeds, and the lower motor speed upon shifting gears has better NVH performance.

The front-end power source (engine and motor) and the rear-end power source (motor) according to the present disclosure have the technical solution of dual-clutch components. At higher speeds, the front-end power source can shift from first gear to second gear to achieve a more optimal gear ratio, thereby enhancing engine driving efficiency. During rapid acceleration, power downshifting can be achieved to meet overtaking requirements. Both upshifting and downshifting are executed via the dual-clutch system without power interruption.

The motor shifting is also performed via the dual-clutch system. The advantage is that the shifting process does not interrupt power supply, such that continuous power can be achieved whether the output is positive torque during driving or negative torque during energy recovery, and a smooth shifting process can be achieved. In the case that a synchronizer is used for shifting, the gearbox must have a neutral position, and the motor cannot provide either positive or negative torque to the wheels. In the case that alternative torque compensation is not provided, the vehicle has a dragging or surging during the shifting process.

The present disclosure provides a vehicle including a vehicle body and the above hybrid power system, and the hybrid power system is disposed within the vehicle body.

The above description does not limit the present disclosure in any way. Although the present disclosure has been described as above through the embodiments, they are not intended to limit the present disclosure. Those skilled in the art are able to make some changes or modifications to the above disclosed technical contents to give equivalent embodiments of equivalent changes without departing from the scope of the present disclosure. However, any simple alterations, equivalent changes and modifications made, without departing from the contents of the technical solutions of the present disclosure, on the above embodiments based on the technical essence of present disclosure shall fall within the scope of the technical solutions of the present disclosure.

## Claims

1. A gearbox, comprising: a first clutch assembly (21), a second clutch assembly (22), a first gear train (31), a second gear train (32), a third gear train (33), a power input shaft (41), and a power output shaft (42), the power input shaft (41) being parallel to the power output shaft (42); wherein
the first clutch assembly (21) comprises a first clutch collar (211), a first hollow shaft (212), a first clutch (213), and a second clutch (214), wherein the first clutch (213) and the second clutch (214) are axially spaced apart within the first clutch collar (211), the first clutch (213) is connected to an inner wall of the first clutch collar (211) and the first hollow shaft (212), the second clutch (214) is connected to the inner wall of the first clutch collar (211) and a first end of the power input shaft (41), the first end of the power input shaft (41) is coaxially inserted into the first clutch collar (211), and the first hollow shaft (212) is movably sleeved over the power input shaft (41);
the second clutch assembly (22) comprises a second clutch collar (221), a second hollow shaft (222), a third clutch (223), and a fourth clutch (224), wherein the third clutch (223) and the fourth clutch (224) are axially spaced apart within the second clutch collar (221), the third clutch (223) is connected to an inner wall of the second clutch collar (221) and the second hollow shaft (222), the fourth clutch (224) is connected to the inner wall of the second clutch collar (221) and a second end of the power input shaft (41), the second end of the power input shaft (41) is coaxially inserted into the second clutch collar (221), and the second hollow shaft (222) is movably sleeved over the power input shaft (41); and
the first gear train (31) is connected to the power input shaft (41) and the power output shaft (42), the second gear train (32) is connected to the first hollow shaft (212) and the power output shaft (42), the third gear train (33) is connected to the second hollow shaft (222) and the power output shaft (42), and the power output shaft (42) is configured to be drivingly connected to wheels.

2. The gearbox according to claim 1, wherein each of the first clutch (213), the second clutch (214), the third clutch (223), and the fourth clutch (224) comprises a steel plate (201) and a clutch plate (202); wherein
an outer circumferential wall of the steel plate (201) of the first clutch (213) is connected to the inner wall of the first clutch collar (211), the clutch plate (202) of the first clutch (213) is axially movably sleeved over the first hollow shaft (212), and the clutch plate (202) of the first clutch (213) is circumferentially locked to the first hollow shaft (212);
an outer circumferential wall of the steel plate (201) of the second clutch (214) is connected to the inner wall of the first clutch collar (211), the clutch plate (202) of the second clutch (214) is axially movably sleeved over the first end of the power input shaft (41), and the clutch plate (202) of the second clutch (214) is circumferentially locked to the power input shaft (41);
an outer circumferential wall of the steel plate (201) of the third clutch (223) is connected to the inner wall of the second clutch collar (221), the clutch plate (202) of the third clutch (223) is axially movably sleeved over the second hollow shaft (222), and the clutch plate (202) of the third clutch (223) is circumferentially locked to the second hollow shaft (222); and
an outer circumferential wall of the steel plate (201) of the fourth clutch (224) is connected to the inner wall of the second clutch collar (221), the clutch plate (202) of the fourth clutch (224) is axially movably sleeved over the second end of the power input shaft (41), and the clutch plate (202) of the fourth clutch (224) is circumferentially locked to the power input shaft (41).

3. The gearbox according to claim 1 or 2, further comprising: a drive shaft (61) and a fifth clutch (62); wherein the fifth clutch (62) is connected to the drive shaft (61), and one end of the drive shaft (61) is coaxially connected to either the first clutch collar (211) or the second clutch collar (221).

4. The gearbox according to claim 1 or 2, further comprising a fourth gear train (34); wherein an input gear of the fourth gear train (34) is sleeved over the power output shaft (42), and an output gear of the fourth gear train (34) is configured to be drivingly connected to the wheels.

5. A hybrid power system, comprising: an engine (10), a first motor (11), a second motor (12), and the gearbox as defined in any one of claims 1 to 4;
wherein the engine (10) and the first motor (11) are drivingly connected to one of the first clutch collar (211) and the second clutch collar (221), and the second motor (12) is drivingly connected to the other of the first clutch collar (211) and the second clutch collar (221).

6. The hybrid power system according to claim 5, wherein an output shaft of the engine (10) is coaxially connected to the first clutch collar (211), the first clutch collar (211) is disposed in an inner bore a rotor of the first motor (11), and an outer circumferential wall of the first clutch collar (211) is connected to an inner wall of the rotor of the first motor (11), the second clutch collar (221) is disposed in an inner bore of a rotor of the second motor (12), and an outer circumferential wall of the second clutch collar (221) is connected to an inner wall of the rotor of the second motor (12).

7. The hybrid power system according to claim 5, wherein an output shaft of the engine (10) is coaxially connected to the first clutch collar (211), an output shaft of the first motor (11) is connected to the output shaft of the engine (10) via a gear train, the second clutch collar (221) is disposed in an inner bore of a rotor of the second motor (12), and an outer circumferential wall of the second clutch collar (221) is connected to an inner wall of the rotor of the second motor (12).

8. The hybrid power system according to any one of claims 5 to 7, further comprising: a differential (70); wherein the differential (70) is drivingly connected to the power output shaft (42).

9. The hybrid power system according to any one of claims 5 to 7, further comprising: a power supply assembly; wherein the power supply assembly comprises a battery and an inverter, wherein the inverter is connected to the battery, and the first motor (11) and the second motor (12) are connected to the inverter.

10. A vehicle, comprising: a vehicle body and the hybrid power system as defined in any one of claims 5 to 9; wherein the hybrid power system is disposed in the vehicle body.
